# EUROPEAN PATENT APPLICATION

(11) **EP 2 150 028 A1**
(43) Date of publication of application: **03.02.2010**
(21) Application number: 08104930.6
(22) Date of filing: 31.07.2008
(51) Int. Cl.: H04L 29/12

(54) **Method and device for address translation and communication system comprising such device**

(71) Applicant: Nokia Siemens Networks OY, 02610 Espoo (FI)
(72) Inventor: Bahls, Thomas, 17489, Greifswald (DE); Duchow, Daniel, 17033 Neubrandenburg (DE)
(74) Representative: Bruglachner, Thomas E.

(57) **Abstract**

A method and a device for address translation are provided, said method comprising the steps of (i) a first address associated with data is translated in a second address, wherein the second address is a unique layer-2 address in a network or a portion thereof; and (ii) wherein said data are forwarded using the second address. Furthermore, a communication system is suggested comprising said device.

## Description

The invention relates to a method and to a device for address translation and communication system comprising such a device.

There is an increasing demand for access systems comprising and/or being associated with a DSLAM or with a GPON to be based upon layer-3 address mechanisms instead of layer-2 addressing schemes. Based on the IP address a user interface as well as services requested shall be identified in downstream direction (i.e. from the network towards the user).

From the outside, the access node appears as layer-3 device, i.e. IP addresses are used for the user interface as well as for the network interface. There shall be no dependencies to layer-2 addressing schemes. Hence, all components affected in a distributed environment such as the IP-DSLAM or the GPON need to cope with or provide layer-3 forwarding in order to be independent from underlying layer-2 addresses. Even in such a case, layer-2 forwarding hardware demands keeping particular dependencies, e.g., for allowing an unambiguous mapping of tuples comprising layer-2 and layer-3 addresses.

In order to support ambiguous layer-3 addresses (and to allow for virtual routing or for overlapping address spaces), layer-2 addresses need to be disjoint to each other. However, this requirement of a unique set of layer-2 addresses is not reliable in real network scenarios.

There are several possibilities to provide for a continuous layer-3 addressing scheme in a distributed network environment. Each such approach has particular disadvantages.

For example, the access node may utilize IP for addressing purposes. In this case, the central switching unit as well as the interface unit need to provide IP forwarding (routing) services. This leads to a significant increase in cost for such components in particular as layer-3 processing requires more powerful devices.

Another example is a utilization of virtual LANs (VLANs): Messages can be routed within the access node by VLAN switching. For each subscriber and for each service, a separate VLAN is set up. As only 4096 VLAN addresses are available, the user will experience significant restrictions to his or her VLAN address space. Furthermore, the VLAN 12 bit address space may not suffice as each user interface and each service require a separate VLAN.

As a further example, messages within the access node can be routed by their MAC addresses. Although, each MAC address is defined to be unique, it can be easily manipulated by a user (e.g., on purpose or due to a misconfiguration). It also happened that based on a manufacturing defect network cards were shipped with identical MAC addresses.

The problem to be solved is to overcome the disadvantages stated above and in particular to enable forwarding decisions to cope with ambiguous layer-3 addresses also in combination with layer-2 addresses that are not disjoint with each other.

This problem is solved according to the features of the independent claims. Further embodiments result from the depending claims.

In order to overcome this problem, a method for address translation is provided comprising the steps:
- a first address associated with data is translated in a second address, wherein the second address is a unique layer-2 address in a network or a portion thereof;
- wherein said data is forwarded using the second address.

Preferably, data is conveyed from a first network element to a second network element via an access node. The first network element may in particular be or be associated with a user's device, e.g., a CPE. The second network element can be a component within a network or another CPE located anywhere throughout the network. Said data may comprise a source address and a destination address. From the access node's perspective, the source layer-2 address of the first network element may not be unique. Hence, the access node driven by an operator may provide a layer-2 address that is unique and secure (for the operator as generated by himself), in particular unambiguous to the operator. Preferably, this layer-2 address is generated based on a layer-3 and a layer-2 address provided by the CPE. The subsequent upstream network components may then just process layer-2 forwarding without any need for a layer-3 protocol stack. Hence, the approach provided allows data or message forwarding based on layer-2 address information only.

Advantageously, the approach provided allows for only portions of a distributed system to cope with layer-3 forwarding, whereas other components only need to provided layer-2 switching services. Hence, significant savings of costs are possible by only providing layer-2 functionality in components of the distributed system.

Furthermore, the approach allows the operator to deliberately supply CPEs with identical MAC addresses and thus save money otherwise required for each MAC address (charged by IEEE).

It is noted that by address translation in a hierarchical system and/or across several layers, in particular across two OSI layers, the addresses assigned become unambiguous within a particular (sub-)network that is preferably being operated by a network provider.

It is another advantage of the approach provided to allow for an unambiguous forwarding decision in downstream direction. Such decision is based on an address translation as suggested herein.

According to an embodiment, the first address is provided or received in upstream direction.

In an embodiment, the address translation is a hierarchical address translation based in particular on an layer-3 address.

In particular, said address translation may refer to modifying the layer-2 address only. It is possible to also or exclusively translate the layer-3 address.

The hierarchical address translation may be processed by a hierarchical system comprising at least two stages. Forwarding of data may be provided on an IP-address (layer-3) basis, MAC-forwarding may be provided by layer-2. Based on different forwarding mechanisms on different layers, the approach provided allows to provide for an unambiguous forwarding decision. This may in particular be achieved by processing the layer-2 MAC address as described herein. However, other portions of data available on various layers of the protocol stack could be utilized in a similar manner.

In another embodiment, the first address comprises a layer-3 address and a layer-2 address.

Hence, the layer-3 address as well as the layer-2 address may be considered for generating said unique layer-2 address.

It is noted that the "unique layer-2 address" may be unique to the operator of, e.g., an access network (or a network portion in general). This layer-2 address does not have to be globally unique beyond such scope.

In a further embodiment, the second address comprises an identifier or a system identification.

Hence, any identifier or identification ("ID") can be utilized for generating the second address. Such ID can be supplemented to the MAC address or it may be combined (or processed) with the MAC address in any way to generate said unique address.

It is noted that the unique layer-2 address can be generated by various approaches. The access node may assign values (alone or in combination with existing addresses), it may also be capable of processing layer-2 addresses based on a subset of valid layer-2 addresses provided from a general authority (e.g., from IEEE).

In a next embodiment, the second address is a MAC address.

It is also an embodiment that the address translation is processed with or at an access node.

Pursuant to another embodiment, the first address is stored together or associated with the second address. The first address may in particular be stored in a table or in a database.

According to an embodiment, the second address associated with data received is back-translated into the first address and said data are forwarded using the first address.

Such back-translation can be performed, e.g., by utilizing a look-up in the aforementioned table or by launching a request to the database comprising the addresses associated with one another.

According to another embodiment, the address translation is processed at an access node connecting at least one user device, in particular at least one CPE, and a network.

In yet another embodiment, the second address is used towards the network.

According to a next embodiment, the address translation is used in upstream and/or in downstream direction.

Pursuant to yet an embodiment, the first address associated with said data is translated in a second address only if the first address is not unique.

Hence, the access node may not translate any layer-2 address in case it is considered unique. Only such addresses can be translated that may interfere with each other (in particular when running layer-2 forwarding only).

The problem stated above is also solved by a device comprising a and/or being associated with a processor unit and/or a hard-wired circuit and/or a logic device that is arranged such that the method as described herein is executable on said processor unit.

According to an embodiment, the device is a communication device, in particular a or being associated with a central office or digital subscriber line access multiplexer or any access node.

The problem stated supra is further solved by a communication system comprising the device as described herein.

Embodiments of the invention are shown and illustrated in the following figure:

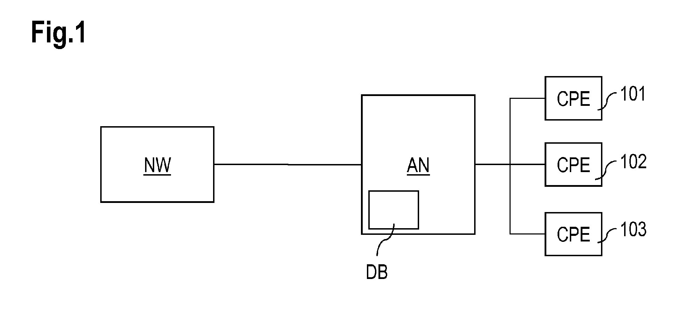

- Fig.1: shows a scenario comprising an access node connected in upstream direction to a network and in downstream direction to several customer premises equipments.

The approach provided allows in particular an access node to forward data based on cost-effective layer-2 processing by utilizing a MAC address in a way that MAC address translation forces a unique MAC address within the access node. Hence, the access node then is able to address downstream data in a safe and unique way.

This is in particular achieved by storing the MAC address provided from the customer's device (e.g., from a CPE) when entering the access node or the access network of a particular provider. The customer's MAC address can be stored in a database or a table provided in particular with the access node. This customer's MAC address will be required for back-translation purposes. Towards the network, the customer's MAC address is replaced by a MAC address that is provided by the system, said MAC address being unique. There are various means to ensure generation of a unique MAC address. This approach is in particular useful as the provider is in charge of generating the unique MAC address. Hence, the provider can efficiently produce MAC addresses that can be trusted.

One possibility for generating a unique MAC address is utilizing a system identification of the Access Node (AN) as the generating authority ("SYSTEM ID"). Hence, the operator is able to define a unique address that can also be deemed a secure address (as it is generated by the operator himself). Hence, the access node is enabled to provide layer-2 forwarding based on such address without any need for any layer-3 functionality. In other words, even such components without layer-3 functionality are capable of forwarding data. This allows to use cheap components to provide forwarding capability, without the need for stacking expensive layer-3 routing functionality to such components. Such layer-2 forwarding is visible to the operator, but invisible to the end user. It is also an advantage that such layer-2 forwarding is compatible with legacy equipment.

It is noted, however, that instead of MAC address translation any other address translation may be applicable as well. The approach referred to herein in particular relates to a layer-2 address translation, said layer-2 may be based and/or associated with the OSI layer model.

Address translation as described, in particular MAC address translation (MAT), hence allows providing secure and reliable layer-2 addressing in particular within an access node thereby resulting in a defined path for IP data conveyed via layer-3. This further allows a inexpensive implementation of the access node, because expensive means for layer-3 forwarding based on the IP address can be omitted on the interface units. The approach is compatible with existing equipment as well as with current standardization; thus, internal interfaces of the access node can be published or made available as external interfaces.

It is an option to provide address translation, in particular MAT, only for such addresses which are not unambiguously identified within the access node. The other addresses may be utilized for forwarding purposes as they are (or added by a particular piece of information, e.g., an identifier of the operator).

It is also an option that higher protocol layers used for an address resolution protocol (ARP) or for a dynamic host configuration protocol (DHCP) are considered when processing address translation.

**Fig.1** shows an access node AN connected to a network NW. The access node AN is in downstream direction connected to several CPEs 101 to 103. As a message sent from any CPE towards the network NW (upstream) passes the access node AN, address translation may be performed.

The message generated by the CPE comprises a MAC address that may or may not be unique throughout the network. The operator of the access node AN, however, can translate this MAC address into a unique address (known to the operator and throughout his network to be unique and secure) further conveying the message with the unique layer-2 MAC address towards the network NW. The CPE's MAC address is stored with the new unique address in a database DB.

It is noted that the operator of the access node AN may in particular utilize the combination of IP address and MAC address and/or a port number, e.g., a DSL-port number as a basis for access translation into a unique layer-2 MAC address. This in particular enables the operator to forward arriving data from the network to the correct destination: The unique layer-2 MAC address is looked up in the database DB and back-translated into the layer-2 address (and/or the layer-3 address) of the CPE. The data is then forwarded to its destination CPE.

### List of Abbreviations:

- AN: Access Node
- ARP: Address Resolution Protocol
- CPE: Customer Premises Equipment
- DB: Database
- DHCP: Dynamic Host Configuration Protocol
- DSL: Digital Subscriber Line
- DSLAM: Digital Subscriber Line Access Multiplexer
- GPON: Gigabit Passive Optical Network
- IP: Internet Protocol
- LAN: Local Area Network
- MAC: Media Access Control
- MAT: MAC Address Translation
- NW: Network
- VLAN: Virtual LAN

## Claims

1. A method for address translation comprising the steps:
- a first address associated with data is translated in a second address, wherein the second address is a unique layer-2 address in a network or a portion thereof;
- wherein said data are forwarded using the second address.

2. The method according to claim 1, wherein the first address is provided or received in upstream direction.

3. The method according to any of the preceding claims, wherein the address translation is a hierarchical address translation based on an layer-3 address.

4. The method according to any of the preceding claims, wherein the first address comprises a layer-3 address and a layer-2 address.

5. The method according to any of the preceding claims, wherein the second address comprises an identifier or a system identification.

6. The method according to any of the preceding claims, wherein the second address is a MAC address.

7. The method according to any of the preceding claims, wherein the address translation is processed with or at an access node.

8. The method according to any of the preceding claims, wherein the first address is stored together or associated with the second address.

9. The method according to claim 8, wherein the first address is stored in a table or in a database.

10. The method according to any of the preceding claims, wherein the second address associated with data received is back-translated into the first address and said data are forwarded using the first address.

11. The method according to any of the preceding claims, wherein the address translation is processed at an access node connecting at least one user device, in particular at least one CPE, and a network.

12. The method according to claim 11, wherein the second address is used towards the network.

13. The method according to any of the preceding claims, wherein the address translation is used in upstream and/or in downstream direction.

14. The method according to any of the preceding claims, wherein the first address associated with said data is translated in a second address only if the first address is not unique.

15. A device comprising a and/or being associated with a processor unit and/or a hard-wired circuit and/or a logic device that is arranged such that the method according to any of the preceding claims is executable thereon.

16. The device according to claim 15, wherein said device is a communication device, in particular a or being associated with a central office or digital subscriber line access multiplexer or any access node.

17. Communication system comprising the device according to any of claims 15 or 16.
